# FASCICULE DE BREVET EUROPEEN

(11) **EP 2 365 686 B1**
(45) Date de publication et mention de la délivrance du brevet: **16.10.2013**
(21) Numéro de dépôt: 11157381.2
(22) Date de dépôt: 08.03.2011
(51) Int. Cl.: H04M 3/38, H04M 3/42, H04M 3/46

(54) **Procédé et dispositif de traitement d'appels dans un réseau de communication comprenant des terminaux nomades tels que des terminaux de téléphonie de type softphone**
Verfahren und Vorrichtung zur Telefonanrufverarbeitung in einem Kommunikationsnetz welches nomadische Endgeräte wie Softphone Endgeräte umfasst
Method and device for call processing in a communication network comprising nomadic terminals such as softphone terminals

(30) Priorité: 12.03.2010 FR 1051804
(43) Date de publication de la demande: 14.09.2011
(73) Titulaire: Orange, 75015 Paris (FR)
(72) Inventeur: Bouvet, Bertrand, 22700, PERROS-GUIREC (FR)
(74) Mandataire: Regimbeau

(56) Documents cités:
- WO-A1-2008/074122
- US-A1- 2005 282 559
- US-B1- 7 315 518

## Description

La présente invention concerne la téléphonie dans des réseaux de communication de type Internet et plus particulièrement un procédé et un dispositif de traitement d'appels dans un réseau de communication comprenant des terminaux nomades tels que des terminaux de téléphonie de type softphone.

La téléphonie via un réseau de communication de type Internet, par exemple la communication appelée VoIP (acronyme de *Voice over Internet Protocol* en terminologie anglo-saxonne), aussi appelée voix sur réseau IP (sigle d*'Internet Protocol* en terminologie anglo-saxonne), permet la transmission de la voix sur un réseau de communication en mode *unicast* (point-à-point), *broadcast* (un émetteur et plusieurs récepteurs) ou *multicast* (un récepteur et potentiellement tous les récepteurs). Un tel mode de communication VolP est typiquement basé sur le protocole SIP (acronyme de Session *Initiation Protocol* en terminologie anglo-saxonne).

La mise en oeuvre de la voix sur réseau IP est généralement réalisée à l'aide d'une application logicielle, appelée *softphone* en terminologie anglo-saxonne, exécutée sur un ordinateur, par exemple un ordinateur de type PC (sigle de *Personal Computer* en terminologie anglo-saxonne), un assistant personnel, aussi appelé PDA (sigle de *Personal Digital Assistant* en terminologie anglo-saxonne) ou un téléphone mobile intelligent, aussi appelé *smartphone* en terminologie anglo-saxonne. L'usage de la voix sur réseau IP se développe fortement depuis quelques années, notamment dans des offres fixes appelées *Multiplay* selon lesquelles un utilisateur souscrit à une offre combinant la téléphonie et un accès Internet ainsi que dans des offres de téléphonie mobile.

L'établissement d'un lien de communication entre un terminal de type softphone et le réseau de communication utilisé est réalisé à travers un point d'accès personnel, ou boîtier de connexion, par exemple un modem ADSL (sigle d*'Asymmetric Digital Subscriber Line* en terminologie anglo-saxonne) ou un boîtier de raccordement par câble, ou à travers un point d'accès public, par exemple une borne WiFi d'un opérateur de télécommunication.

Lorsque des terminaux de type softphone sont connectés au réseau de communication via un boîtier de connexion, ils sont considérés comme des terminaux classiques tels que des téléphones RTC (sigle de Réseau Téléphonique Commuté) ou DECT (acronyme de *Digital Enhanced Cordless Telephone* en terminologie anglo-saxonne). En situation de nomadisme, les terminaux de type softphone bénéficient généralement des forfaits associés aux boîtiers de connexion de leurs utilisateurs via le réseau du fournisseur d'accès de services correspondant.

Avant toute utilisation, les applications « softphones » doivent être téléchargées à partir d'un site Web, installées sur un ordinateur ou tout type de terminal compatible puis elles doivent obtenir un fichier de configuration permettant l'utilisation du service VoIP.

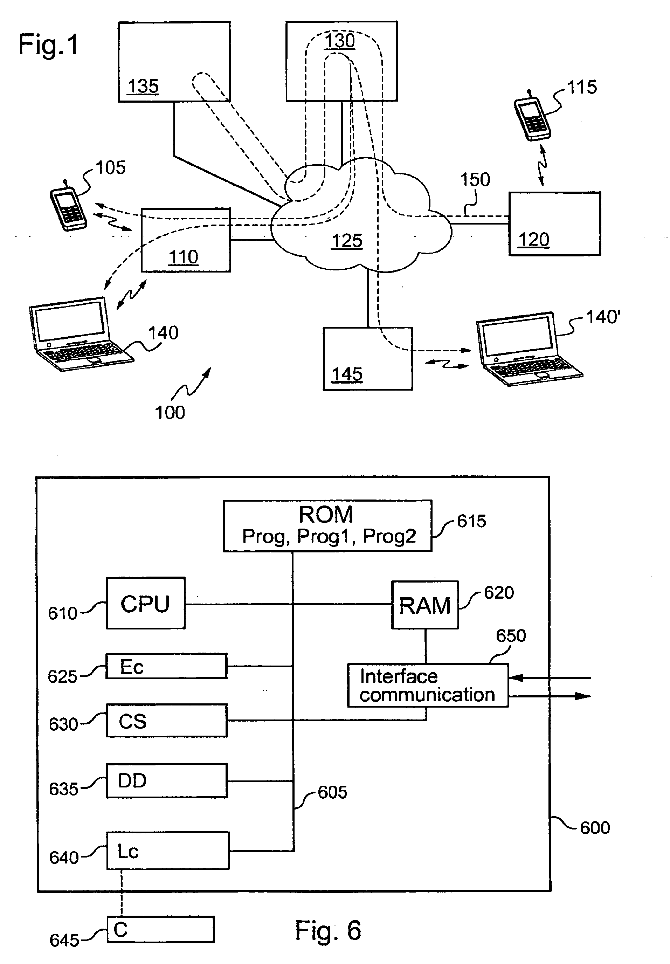

La figure 1 illustre schématiquement un environnement de téléphonie dans lequel peut être utilisé un terminal de type softphone.

L'environnement de téléphonie 100 permet ici à un terminal classique de téléphonie 105, par exemple un terminal DECT, relié à un boîtier de connexion 110, d'établir ou de recevoir un appel avec un autre terminal classique de téléphonie 115, relié à un boîtier de connexion 120, les boîtiers de connexion 110 et 120 étant reliés au réseau 125. Le contrôle et la gestion des appels sont ici réalisés par le serveur CSCF 130 (sigle de *Call Session Control Function* en terminologie anglo-saxonne) relié au serveur 135 d'application de téléphonie via le réseau 125. Le boîtier de connexion 110 permet également à un terminal de type softphone, exécuté par exemple par l'ordinateur 140, d'établir ou de recevoir des appels, notamment à travers une connexion de type WiFi, entre l'ordinateur 140 et le boîtier de connexion 110. Le terminal 105 et le terminal de type softphone mis en oeuvre dans l'ordinateur 140 partagent ici la même identité publique.

Le terminal de type softphone mis en oeuvre dans l'ordinateur 140 peut également être utilisé depuis un point d'accès distinct du boîtier de connexion 110, notamment du point d'accès 145 pouvant être, par exemple, un point d'accès de type WiFi. Dans ce contexte, l'ordinateur 140 est référencé 140'.

La flèche 150 illustre un exemple d'établissement d'un appel entre le terminal 115 et un terminal lié au boîtier de connexion 110, c'est-à-dire un des terminaux (105, 140, 140') partageant une même identité publique liée au boîtier de connexion 110.

Typiquement, les terminaux de type softphone utilisent l'architecture IMS (sigle d'*IP Multimedia Subsystem* en terminologie anglo-saxonne) utilisant, pour identifier les terminaux, les identités suivantes :
- une identité privée référencée IMPI (sigle d'*IP Multimedia Private Identity* en terminologie anglo-saxonne) ; et,
- une identité publique référencée IMPU (sigle d'*IP Multimedia PUblic identity* en terminologie anglo-saxonne).

Ces identités sont de type URI (sigle d*'Uniform Resource Identifier* en terminologie anglo-saxonne).

Les terminaux de type softphone, complémentaires à des terminaux physiques attachés à un boîtier de connexion, peuvent porter la même identité publique (IMPU) que les terminaux classiques et, selon les cas, la même identité privée (IMPI) ou non.

Il est observé ici que le partage d'une identité publique entre plusieurs terminaux permet notamment d'alerter tous les terminaux partageant une même identité publique lorsqu'un appel entrant est détecté. Il permet également de réduire les ressources mises en oeuvre par le fournisseur de service, en particulier le nombre de licences logicielles au sein de l'architecture IMS, le modèle économique étant typiquement d'associer une licence par adresse publique. En outre, il est plus facile d'établir une facturation par identité publique que par identifiant client.

Cependant, l'utilisation d'identités publiques multiples pour les terminaux de type softphone est, selon certains aspects, plus facile à mettre en oeuvre. En effet, dans ce cas, le serveur d'application utilisé peut distinguer facilement les appels en provenance de chaque terminal et, par conséquent, appliquer des logiques de services différentes. Il est rappelé ici qu'un serveur d'application SIP ne peut connaître que les identités publiques, les identités privées (IMPI) étant uniquement utilisées pour l'authentification des terminaux.

En considérant que le choix du partage d'une même identité publique (IMPU) est réalisé pour l'ensemble des terminaux d'un client, le fournisseur de services peut fixer des contraintes d'utilisation complémentaires pour les terminaux de type softphone. De telles contraintes sont, par exemple, les suivantes,
- lorsque le terminal de type softphone est relié à un boîtier de connexion (c'est-à-dire au domicile du client) : un seul appel entrant/sortant est autorisé à un instant donné, soit depuis un terminal téléphonique physique relié au boîtier de connexion, soit depuis un terminal de type softphone relié au boîtier de connexion. Cette contrainte fonctionnelle peut être imposée par le fournisseur de services afin d'habituer les clients à considérer leurs terminaux de type softphone comme des terminaux classiques. Une option de type "Appels Simultanés" peut être proposée pour autoriser plusieurs appels entrants/sortants simultanés ; et,
- lorsque le terminal de type softphone est utilisé en situation de nomadisme : le fournisseur de services souhaite généralement autoriser deux appels simultanés (un depuis un terminal classique relié au boîtier de connexion et un autre depuis un terminal de type softphone en situation de nomadisme) pour des raisons règlementaires. En effet, si le terminal de type softphone est utilisé en situation de nomadisme pour un premier appel actif, une personne à son domicile doit pouvoir utiliser son terminal classique pour appeler un service d'urgence (pompiers, gendarmerie, ...) quelque soit son abonnement.

Par conséquent, en raison des services souhaités et en considérant que les terminaux d'un client partagent une même identité publique, le serveur d'application téléphonique en charge du compteur d'appels simultanés doit disposer d'une information de localisation du ou des terminaux de type softphone d'un client pour mettre en oeuvre la logique de services correspondante.

Les tables 1 et 2 données en annexe illustrent, à titre d'exemple, les possibilités de combinaison d'appels simultanés souhaitées par un fournisseur de services selon la configuration de connexion d'un terminal de type softphone associé à un boîtier de connexion lorsqu'un service de double appel n'est pas mis en oeuvre (table 1) et lorsqu'il est mis en oeuvre (table 2).

Cependant, il est rappelé ici que les informations de localisation sont généralement fournies de manière statique dans le serveur d'application téléphonique lors de l'enregistrement des clients car les équipements de fourniture dynamique de localisation ne sont pas disponibles ou ont un coût particulièrement élevé. De plus, suivant le point d'accès d'un terminal de type softphone en situation de nomadisme, il n'est pas certain que le fournisseur de l'accès (par exemple un point d'accès Wifi) soit en mesure de fournir cette information. En outre, même s'il la connaissait, il devrait disposer d'un équipement de type point d'entrée réseau VoIP de manière à insérer cette information de localisation dans le protocole SIP via l'entête SIP P-ANI (sigle de P Access *Network Information* en terminologie anglo-saxonne), ce qui n'est pas le cas. En outre, une telle solution engendrerait des problèmes de confidentialité d'informations pouvant être considérées comme personnelles.

Les documents US 2005//282559 et WO 2008/2008/074122 décrivent une architecture d'un système de gestion de services de téléphonie selon l'état de la technique antérieure.

L'invention permet de résoudre au moins un des problèmes exposés précédemment en permettant notamment de détecter les appels sortants issus d'un boîtier de connexion et de terminaux de type softphone associés à ce boîtier puis de détecter si les terminaux de type softphone sont connectés via le boîtier de connexion ou utilisés en situation de nomadisme. Des identités publiques communes sont utilisées pour l'ensemble des terminaux d'un client pour, notamment, éviter les coûts de licence logicielle complémentaire et, en outre, faciliter des aspects liés aux systèmes de traitement de l'information utilisés visant, par exemple, l'enregistrement des clients, la facturation et la synchronisation d'informations personnelles ainsi que pour simplifier les mécanismes de configuration VoIP des terminaux (pas besoin d'identifier précisément chacun des terminaux de type softphone).

L'invention a ainsi pour objet un procédé de gestion de services dans un serveur d'application de téléphonie connecté à un réseau de communication, au moins un boîtier de connexion étant relié audit réseau de communication, au moins un terminal nomade, par exemple un terminal de type softphone, étant directement relié audit réseau de communication ou étant relié audit réseau de communication via ledit au moins un boîtier de connexion, ledit au moins un terminal comprenant une identité publique liée audit au moins un boîtier de connexion et partagée avec au moins un autre terminal lié audit au moins un boîtier de connexion, distinct dudit au moins un terminal appelé premier terminal, ce procédé comprenant les étapes suivantes,
- réception d'au moins une demande de service dudit premier terminal, ladite au moins une demande de service comprenant une indication de localisation relative dudit premier terminal ;
- analyse de ladite au moins une demande de service selon une logique prédéterminée, ladite logique prédéterminée étant fonction d'une indication de localisation relative ; et,
- en réponse à ladite étape d'analyse, rejet ou mise en oeuvre dudit au moins un service demandé.

Le procédé selon l'invention permet ainsi de gérer des demandes de service issues de terminaux liés à un boîtier de connexion et partageant une identité publique avec d'autres terminaux liés à ce boîtier selon la localisation des terminaux appelants ces services et une offre d'accès à ces services. Comme indiqué précédemment, l'utilisation d'identités communes permet notamment d'éviter des coûts de licence logicielle complémentaire, de faciliter des aspects liés aux systèmes de traitement de l'information utilisés visant, par exemple, l'enregistrement des clients**,** la facturation et la synchronisation d'informations personnelles ainsi que simplifier les mécanismes de configuration des terminaux.

Selon un mode de réalisation particulier, ladite au moins une demande de service est un message de signalisation d'appel, ladite étape d'analyse comprenant une étape de comparaison d'un nombre d'appels en cours liés audit au moins un boîtier de connexion avec un nombre maximal d'appels autorisés selon ladite au moins une indication de localisation relative. Le procédé selon l'invention permet ainsi de gérer facilement l'accès à des services selon des conditions liées à un nombre d'appels maximum autorisés et associées à des offres souscrites par des utilisateurs.

De façon avantageuse, ledit message de signalisation est un message conforme au protocole SIP, ladite indication de localisation relative étant transmise dans un champ dédié dudit message. Le procédé selon l'invention permet ainsi d'obtenir simplement une information de localisation d'un terminal à l'origine d'une requête d'accès à un service.

Toujours selon un mode de réalisation particulier, le procédé comprend en outre une étape de chargement d'un profil de services, ledit profil étant lié à un utilisateur dudit premier terminal et à ladite indication de localisation relative. Le procédé selon l'invention permet ainsi de gérer facilement l'accès à des services selon des conditions associées aux utilisateurs, en fonction de leur localisation.

Toujours selon un mode de réalisation particulier, le procédé comprend en outre une étape de transmission d'au moins une information de configuration dudit premier terminal, préalablement à ladite étape de réception d'au moins une demande de service, ladite au moins une information de configuration étant transmise en réponse à une demande d'activation dudit premier terminal, ladite information de configuration étant représentative de ladite indication de localisation relative, la réception de ladite demande d'activation et ladite étape de transmission d'au moins une information de configuration dudit premier terminal étant mises en oeuvre dans un serveur de configuration.

Ladite indication de localisation relative est avantageusement déterminée selon une adresse source comprise dans ladite demande d'activation.

Toujours selon un mode de réalisation particulier, le procédé comprend en outre une étape d'activation initiale dudit premier terminal, ledit premier terminal étant relié audit au moins un boîtier de connexion, ladite étape de configuration comprenant la création et la transmission audit premier terminal d'un cookie de session comprenant une identification dudit premier terminal permettant notamment l'identification ultérieure du terminal, évitant ainsi une nouvelle demande de saisie de paramètres d'identification et/ou d'authentification du terminal lors de son démarrage.

Le procédé comprend en outre, de préférence, une étape de réception dudit cookie de session et une étape d'identification dudit premier terminal à partir dudit cookie de session reçu.

L'invention a également pour objet un programme d'ordinateur comprenant des instructions adaptées à la mise en oeuvre de chacune des étapes du procédé décrit précédemment lorsque ledit programme est exécuté sur un ordinateur, un serveur d'application de téléphonie comprenant des moyens adaptés à la mise en oeuvre de chacune des étapes du procédé décrit précédemment ainsi qu'un dispositif comprenant au moins un serveur d'application de téléphonie et au moins un serveur de configuration, le dispositif comprenant des moyens adaptés à la mise en oeuvre de chacune des étapes du procédé décrit précédemment.

Les avantages procurés par ce programme d'ordinateur, ce serveur d'application de téléphonie et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre schématiquement un environnement de téléphonie dans lequel peut être utilisé un terminal de type softphone ;
- la figure 2 illustre schématiquement certaines étapes de configuration d'un terminal de type softphone lors de sa première activation ;
- la figure 3 illustre schématiquement certaines étapes de gestion d'un appel émis par un terminal de type softphone lorsque ce dernier est connecté au boîtier de connexion auquel il est lié ;
- la figure 4 illustre schématiquement certaines étapes de configuration d'un terminal de type softphone lors de son activation en situation de nomadisme ;
- la figure 5, comprenant les figures 5a et 5b, illustre schématiquement certaines étapes mises en oeuvre dans un serveur d'application pour traiter des appels conformément à l'invention ; et,
- la figure 6 montre un exemple de dispositif permettant d'implémenter au moins partiellement l'invention.

De façon générale, l'invention vise un mécanisme de gestion d'appels pour associer une logique de services selon des informations de localisation relative. Ces dernières sont transmises par les terminaux nomades, par exemple des terminaux de type softphone, à un serveur d'application, dans un message de signalisation d'appel, l'identité publique du terminal étant partagée avec d'autres terminaux liés à un même boîtier de connexion. Ces informations de localisation relative visent essentiellement le mode de connexion du terminal afin de déterminer s'il est connecté via le boîtier de connexion auquel il est lié ou via un point d'accès distinct. Elle peut notamment prendre les valeurs « domicile » ou « nomadisme ». Elle est utilisée par un serveur d'application qui gère un compteur d'appels pour contrôler les appels signalés, entrants ou sortants, afin de les établir ou non selon une logique prédéterminée et un niveau d'abonnement.

Selon un mode de réalisation particulier, l'invention est mise en oeuvre en utilisant le protocole SIP. Un champ particulier, appelé ici SIP User *Agent,* est valorisé au niveau de la pile SIP. Il contient une information de localisation relative du terminal de type softphone permettant à un serveur d'application recevant cette information de contrôler les appels en conséquence.

De façon avantageuse, l'information de localisation relative est déterminée par un serveur d'application auquel se connecte le terminal de type softphone lors de la phase de démarrage, permettant notamment sa configuration VoIP. L'information de localisation relative peut être déterminée, en particulier, selon l'adresse logique du terminal, par exemple son adresse IP, et l'adresse logique du boîtier de connexion auquel est lié le terminal. L'information de localisation relative peut être déterminée différemment, notamment en comparant la position géographique d'un terminal, identifiée, par exemple, à l'aide d'un module GPS (sigle de *Global Positioning System* en terminologie anglo-saxonne), avec la position géographique du boîtier de connexion déterminée selon les données d'enregistrement de l'utilisateur du terminal.

Pour répondre à certaines demandes opérationnelles du fournisseur de services (compteurs d'appels autorisés différents selon la localisation) et au fait que tous les terminaux liés à un même boîtier de connexion possèdent une même identité publique (IMPU), le champ SIP *User Agent* du protocole SIP comprend une information de localisation obtenue lorsque le terminal demande sa configuration VoIP dès qu'il est activé.

Il convient de rappeler ici que pour des contraintes de sécurité, la configuration d'un terminal de type softphone n'est pas mémorisée de façon locale, elle est téléchargée à chaque activation du terminal.

Lors de sa première activation, le terminal de type softphone doit ici être connecté au boîtier de connexion auquel il est lié. Il peut ainsi télécharger sa configuration VoIP depuis un serveur de type FCPE (sigle de *Frontal Customer Premise Equipment* en terminologie anglo-saxonne) dont l'adresse absolue (adresse FQDN, sigle de *Fully Qualified Domain Name* en terminologie anglo-saxonne) lui est fournie dans son code applicatif. La requête de téléchargement peut, par exemple, être une demande http (sigle de *HyperText Transfer Protocol* en terminologie anglo-saxonne).

Le serveur de configuration FCPE extrait l'adresse source du message reçu, par exemple l'adresse IP d'un paquet IP reçu appartenant à ce message. Cette adresse est notamment utilisée pour permettre de répondre à la requête mais également comme référence. Le serveur de téléchargement de configuration FCPE transmet cette adresse à un serveur d'identification pour identifier le client à l'origine de cette requête. Il est observé ici que lorsque le boîtier de connexion a monté sa session Internet PPPoE (sigle de Point-to-Point Protocol over Ethernet en terminologie anglo-saxonne) afin d'obtenir une adresse IP et des adresses des serveurs DNS (sigle de *Domain Name Server* en terminologie anglo-saxonne), le client a été identifié via son identifiant et son mot de passe utilisés pour la session PPPoE et le serveur BAS/Radius (acronyme de *Broadband Access Server* en terminologie anglo-saxonne) pour l'attribution d'une adresse IP. Ces informations sont mémorisées par le serveur d'identification.

L'activation du terminal de type softphone étant ici la première, le serveur de configuration FCPE demande, de préférence, au client son identifiant de messagerie (boite de courrier électronique) pour sécuriser d'avantage le service. Si ces informations saisies par le client sont correctes, le serveur de configuration génère un cookie de session pour une durée significative, par exemple deux mois, évitant ainsi une nouvelle demande de saisie des paramètres d'authentification à chaque démarrage du terminal de type softphone.

Le serveur de configuration FCPE fournit alors le fichier de configuration VoIP au terminal. Il est observé ici que le fichier de configuration VoIP contient un champ complémentaire lié à l'invention, le champ « Localisation=Domicile ». Cette information est fournie sur la base de la reconnaissance de l'adresse IP source attribuée au boîtier de connexion par le serveur BAS.

Le terminal de type softphone initialise alors sa pile SIP avec les champs suivants:
- IMPU=IMPU@nom de domaine contenu dans le fichier de configuration ;
- IMPI=IMPI@nom de domaine contenu dans le fichier de configuration ;
- Password=Password SIP contenu dans le fichier de configuration ; et,
- SIP User Agent=Softphone_Domicile

Le terminal peut alors s'enregistrer et s'authentifier au niveau du coeur de réseau IMS en utilisant le point d'entrée de ce dernier, fourni également dans le fichier de configuration. Il peut alors passer et recevoir des appels.

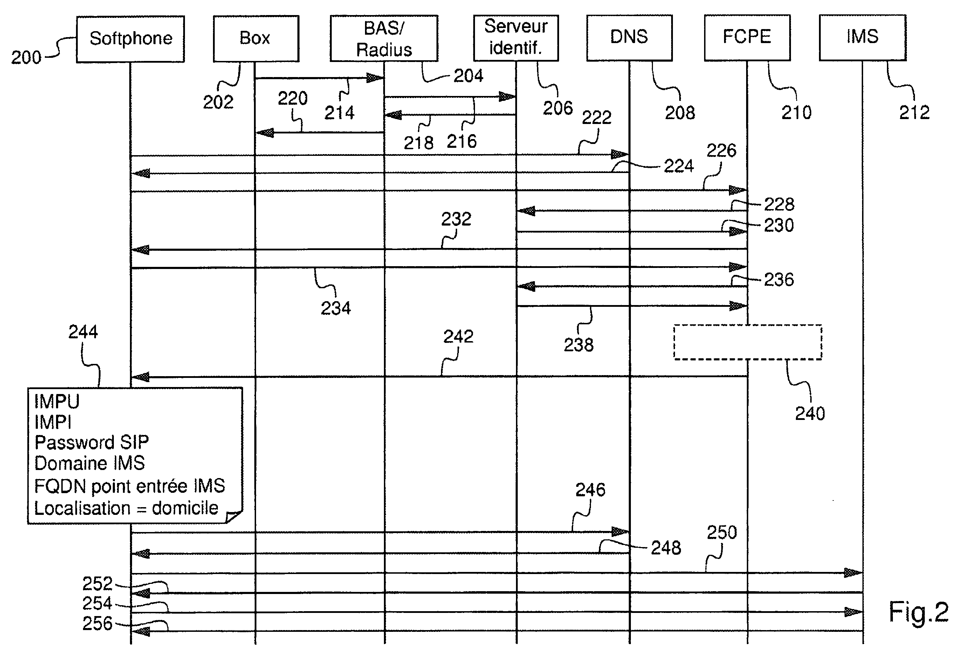

La figure 2 illustre schématiquement certaines étapes de configuration d'un terminal 200 de type softphone lors de sa première activation en fonction du boîtier de connexion 202 (Box), du serveur BAS/Radius 204, du serveur d'identification 206, du serveur DNS 208, du serveur FCPE 210 et du coeur IMS 212.

Une étape initiale (étape 214) a pour objet la demande d'établissement d'une session PPPoE. Cette demande, émise par le boîtier de connexion 202 à destination du serveur BAS/Radius 204, comprend un identifiant et un mot de passe de l'utilisateur pour établir une connexion Internet. Elle permet au boîtier de connexion 202 de monter une session Internet PPPoE.

Cette étape est suivie d'une demande d'identification du client (étape 216). Elle est transmise du serveur BAS/Radius 204 au serveur d'identification 206. Elle comprend l'identifiant et le mot de passe reçus permettant à l'utilisateur d'établir une connexion Internet. En réponse, le serveur BAS/Radius 204 reçoit du serveur d'identification 206 l'identification du client et la liste des services Internet autorisés (étape 218).

Le serveur BAS/Radius 204 détermine alors une adresse IP pour le boîtier de connexion 202 et des adresses IP DNS primaire et secondaire. Ces adresses sont transmises par le serveur BAS/Radius 204 au boîtier de connexion 202 (étape 220).

Le boîtier de connexion 202 monte alors une session Internet PPPoE permettant une activation du terminal 200.

Lors de son activation, le terminal 200, connecté via le boîtier de connexion 202, émet une demande de résolution d'adresse pour obtenir une adresse d'un serveur FCPE à partir d'une adresse de type FQDN (étape 222). Cette demande est transmise par le terminal 200 au serveur DNS 208 via le boîtier de connexion 202 et le serveur BAS/Radius 204. En réponse, le serveur DNS transmet l'adresse IP du serveur FCPE 210 correspondant à l'adresse de type FQDN reçue (étape 224).

Le terminal 200 transmet alors au serveur FCPE 210 une demande d'obtention de fichier de configuration VoIP (étape 226). Cette demande est ici transmise selon le protocole http du terminal 200 au serveur FCPE 210 via le boîtier de connexion 202 et le serveur BAS/Radius 204. A la réception de cette demande, le serveur FCPE 210 interroge le serveur d'identification 206 (étape 228) pour lui demander l'identité du client en fonction de l'adresse IP source de la demande d'obtention du fichier de configuration VoIP. Cette adresse IP correspond à l'adresse IP du boîtier de connexion 202. En réponse, le serveur FCPE 210 reçoit du serveur d'identification 206 l'identité du client (étape 230).

Après obtention de l'identité du client, le serveur FCPE 210 demande, de préférence, au terminal 200 de s'authentifier en transmettant un identifiant et un mot de passe de messagerie (étape 232). Cette demande est transmise par le serveur FCPE 210 à destination du terminal 200 via le serveur BAS/Radius 204 et le boîtier de connexion 202. En réponse, le terminal 200 transmet au serveur FCPE 210, via le boîtier de connexion 202 et le serveur BAS/Radius 204, une demande d'obtention de fichier de configuration VoIP, comprenant l'identifiant et le mot de passe de messagerie de l'utilisateur, selon le protocole http (étape 234).

A la réception de cette demande, le serveur FCPE 210 vérifie auprès du serveur d'identification 206 que le client identifié a bien cet identifiant et ce mot de passe de messagerie (étape 236). Le serveur d'identification 206 répond au serveur FCPE 210 par la positive ou la négative (étape 238).

Si le client identifié a bien cet identifiant et ce mot de passe de messagerie, le serveur FCPE 210 vérifie que le client dispose du service VoIP, génère un cookie de session ayant, de préférence, une période de validité de plusieurs mois, et génère un fichier de configuration VoIP dans lequel figure une information précisant que le terminal 200 est connecté au boîtier de connexion 202, c'est-à-dire que le terminal 200 est dans une configuration « domicile » (étape 240).

Le serveur FCPE 210 transmet alors le fichier de configuration VoIP et le cookie de session générés au terminal 200 via le serveur BAS/Radius 204 et le boîtier de connexion 202 (étape 242). Le fichier de configuration VoIP est, de préférence, transmis au format xml (sigle d*'eXtensible Markup Language* en terminologie anglo-saxonne).

Comme représenté, le fichier de configuration VoIP 244 reçu comprend l'information de localisation relative « localisation=domicile ».

Pour s'enregistrer, le terminal 200 transmet alors une demande de résolution d'adresse au serveur DNS 208, via le boîtier de connexion 202 et le serveur BAS/Radius 204, afin d'obtenir une adresse IP du coeur IMS 212 à partir d'une adresse de type FQDN (étape 246). En réponse, le terminal 200 reçoit du serveur DNS 208, via le serveur BAS/Radius 204 et le boîtier de connexion 202, l'adresse IP d'un point d'entrée du coeur IMS 212 (étape 248).

Le terminal 200 peut alors adresser une demande d'enregistrement au coeur IMS 212 (étape 250). La demande, comprenant l'identité publique du terminal 200, est transmise via le boîtier de connexion 202 et le serveur BAS/Radius 204. En réponse, le coeur IMS 212 demande au terminal 200, via le serveur BAS/Radius 204 et le boîtier de connexion 202, de s'authentifier (étape 252). Le terminal 200 transmet alors une demande d'enregistrement comprenant l'identité publique du terminal 200 et des données d'authentification, au coeur IMS 212 via le boîtier de connexion 202 et le serveur BAS/Radius 204 (étape 254). Le coeur IMS 212 enregistre alors le terminal 200 et le lui confirme, via le serveur BAS/Radius 204 et le boîtier de connexion 202, en lui indiquant la durée d'enregistrement (étape 256).

Le terminal 200 est alors prêt à émettre et à recevoir des appels.

Après enregistrement, si le terminal de type softphone tente de passer un appel sortant, la signalisation d'appel transite dans le coeur IMS et les services téléphoniques liés à l'appelant, aussi appelés *originating* en terminologie anglo-saxonne, sont déclenchés.

La signalisation d'appel SIP transite donc dans le serveur d'application. Ce dernier peut retrouver le compte du client via son identité publique disponible dans les champs *From, P-Preferred-ID* et/ou *P-Asserted-ID* du message SIP. Il peut ainsi vérifier quels services liés à l'appelant doivent être activés pour ce client (secret d'appel, restriction d'appels, etc.).

Le serveur d'application vérifie le compteur d'appels simultanés autorisés pour ce client. Le champ SIP User Agent étant ici valorisé à « Softphone-Domicile », le serveur d'application ne doit autoriser qu'un seul appel simultané (à moins que le client n'ait souscrit à une offre permettant plusieurs appels simultanés). Cette règle est, de préférence, configurée au niveau du serveur d'application.

Si aucun appel n'est actif dans le boîtier de connexion, le compteur d'appel en cours est valorisé à zéro. L'appel sortant initié par le terminal de type softphone est donc autorisé et le compteur d'appel en cours est incrémenté de un le temps de l'appel puis décrémenté de un à la fin de l'appel (via un message de type *BYE*)*.* Si, durant cet appel, le boîtier de connexion tente d'établir un autre appel, le serveur d'application compare la valeur du compteur d'appel avec la valeur maximal d'appels simultanés pour le client et autorise ou non l'appel selon le résultat de la comparaison. A titre d'illustration, si un seul appel simultané est autorisé, le serveur d'application n'autorise pas l'établissement d'un second appel lorsqu'un appel est émis depuis le terminal de type softphone et que ce dernier est localisé au domicile. De même, si le boîtier de connexion a établi un premier appel avant la demande d'établissement d'appel par le terminal de type softphone, le serveur d'application refuse la demande d'appel issu de ce terminal si ce dernier est situé au domicile.

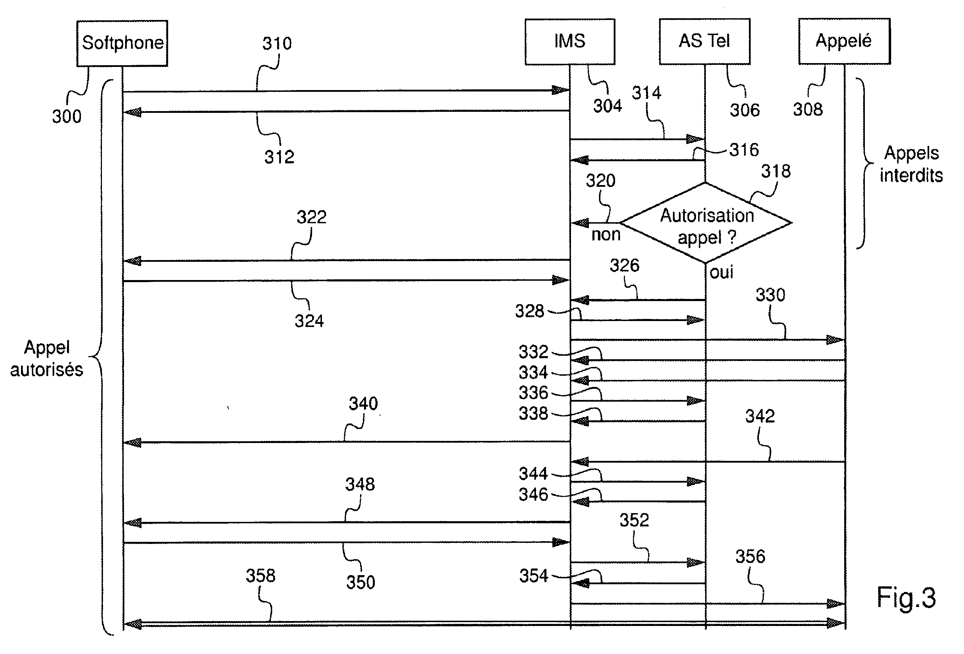

La figure 3 illustre schématiquement certaines étapes de gestion d'un appel émis par un terminal 300 de type softphone en fonction du coeur IMS 304, du serveur d'application de téléphonie 306, noté AS Tel, et du terminal appelé 308, lorsque le terminal est connecté au boîtier de connexion auquel il est lié.

Il est observé ici que bien que toutes les communications entre le terminal 300 et les autres dispositifs transitent via un boîtier de connexion et un serveur BAS/Radius, ces derniers ne sont pas représentés dans un souci de clarté.

Lorsqu'un appel sortant est émis par le terminal 300, un message de signalisation d'appel SIP est transmis par le terminal 300 au coeur IMS 304 (étape 310). Ce message, de type *INVITE*, comprend l'identité publique (IMPU) du terminal appelant, le numéro du terminal de l'appelé (typiquement l'identité publique du terminal appelé) et, conformément à l'invention, une indication de localisation, ici le champ SIP *UserAgent* ayant la valeur « *domicile* ».

En réponse, le coeur IMS 304 transmet un message de type 100 *TRYING* au terminal 300 pour lui indiquer que la demande est en cours de traitement (étape 312). En outre, le coeur IMS 304 transmet le message de signalisation d'appel SIP reçu, avec l'identité publique du terminal appelant, le numéro du terminal appelé et le champ SIP *User Agent,* au serveur d'application de téléphonie 306 (étape 314). Ce dernier transmet un message de type 100 *TRYING* au coeur IMS 304 pour lui indiquer que la demande est en cours de traitement (étape 316).

Un algorithme d'autorisation d'appel, comprenant notamment une étape de comparaison de la valeur d'un compteur d'appels autorisés avec un nombre d'appels maximal autorisés pour le client, est alors utilisé pour déterminer si l'appel peut être établit ou non (étape 318).

Dans la négative, un message de rejet de type *403 Forbidden* est transmis par le serveur d'application de téléphonie 306 au coeur IMS 304 (étape 320) qui le transmet au terminal 300 (étape 322). Le terminal 300 accuse alors réception de ce rejet au coeur IMS 304 (étape 324) qui lui-même retransmet cette information au serveur d'application (non représenté sur la figure 3).

Si, au contraire, l'appel peut être établi, le serveur d'application de téléphonie 306 transmet un message de type *INVITE,* comprenant l'identité publique du terminal appelant et le numéro du terminal appelé, avec ou sans le champ SIP *User Agent,* voire même avec une modification du champ SIP *User Agent,* au coeur IMS 304 (étape 326). En réponse, le coeur IMS 304 transmet un message de type *100 TRYING* au serveur d'application de téléphonie 306 pour lui indiquer que la demande est en cours de traitement (étape 328).

De façon similaire, le coeur IMS 304 transmet alors un message de type *INVITE,* comprenant l'identité publique du terminal appelant et le numéro du terminal appelé, avec ou sans le champ SIP *User Agent,* au terminal appelé 308 (étape 330) qui, en réponse, transmet un message de type *100 TRYING* au coeur IMS 304 pour lui indiquer que la demande est en cours de traitement (étape 332) puis un message de type *180 RINGING* (étape 334).

Le coeur IMS 304 transmet alors le message de type *180 RINGING* reçu au serveur d'application de téléphonie 306 (étape 336) qui le retransmet au coeur IMS 304 (étape 338) d'où il est transmis au terminal 300 (étape 340).

Si le terminal appelé 308 accepte l'appel, un message d'acceptation de type *200 OK* est transmis par ce dernier au coeur IMS 304 (étape 342). Ce message d'acceptation est alors transmis au serveur d'application de téléphonie 306 (étape 344) qui le retransmet au coeur IMS 304 (étape 346) d'où il est transmis au terminal 300 (étape 348).

Le terminal 300 confirme alors l'appel en transmettant en message d'acceptation de type *ACK* au coeur IMS 304 (étape 350). Ce message d'acceptation est ensuite transmis au serveur d'application de téléphonie 306 (étape 352) qui le retransmet au coeur IMS 304 (étape 354) d'où il est retransmis au terminal appelé (étape 356).

Un flux audio 358, par exemple un flux audio RTP (sigle de *Real-time Transport Protocol* en terminologie anglo-saxonne), est alors établi entre le terminal 300 et le terminal appelé 308.

Lorsqu'un terminal de type softphone conforme à l'invention est utilisé en situation de nomadisme, il se connecte, après son démarrage, à un serveur de configuration VoIP FCPE pour obtenir, en particulier, un fichier de configuration VoIP.

Le serveur de configuration FCPE extrait l'adresse source du message reçu, par exemple l'adresse IP d'un paquet IP reçu appartenant à ce message. Cette adresse est notamment utilisée pour permettre de répondre à la requête mais également comme référence. Le serveur de configuration FCPE transmet cette adresse à un serveur d'identification pour identifier le client à l'origine de cette requête.

A ces fins, le serveur d'identification analyse cette adresse IP. Cependant, le terminal étant ici connecté via un point d'accès et non via le boîtier de connexion auquel est lié le terminal, l'adresse IP identifiée ne correspond à aucun client. Dans cette configuration, lorsque le client ne peut être identifié par une adresse IP, le serveur de configuration retrouve l'identifiant du client sur la base du cookie de session créé lors de la première activation et transmis avec la demande d'obtention d'un fichier de configuration VoIP.

Si le cookie est valide, le serveur de configuration génère le fichier de configuration VoIP en indiquant que le terminal est en situation de nomadisme, c'est-à-dire, par exemple, en utilisant la valeur « nomadisme » dans le champ du fichier de configuration (« Localisation=Nomadisme »).

Si la durée de validité du cookie de session est dépassée, le serveur de configuration demande au client de s'authentifier à nouveau, par exemple à partir d'un identifiant et d'un mot de passe de messagerie. Si le client est authentifié, un nouveau cookie de session est généré par le serveur de configuration avec une validité prédéterminée, typiquement plusieurs mois ou plusieurs heures. Il est associé à l'identifiant du client.

Le serveur de configuration génère alors le fichier de configuration VoIP comprenant le champ « Localisation=Nomadisme ».

Le terminal de type softphone initialise alors sa pile SIP avec les champs suivants:
- IMPU=IMPU@nom de domaine contenu dans le fichier de configuration ;
- IMPI=IMPI@nom de domaine contenu dans le fichier de configuration ;
- Password=Password SIP contenu dans le fichier de configuration ; et,
- SIP User Agent=Softphone_Nomadisme.

Le terminal de type softphone peut alors s'enregistrer et s'authentifier au niveau du coeur de réseau IMS en utilisant le point d'entrée de ce dernier fourni également dans le fichier de configuration.

Le softphone peut alors passer et recevoir des appels.

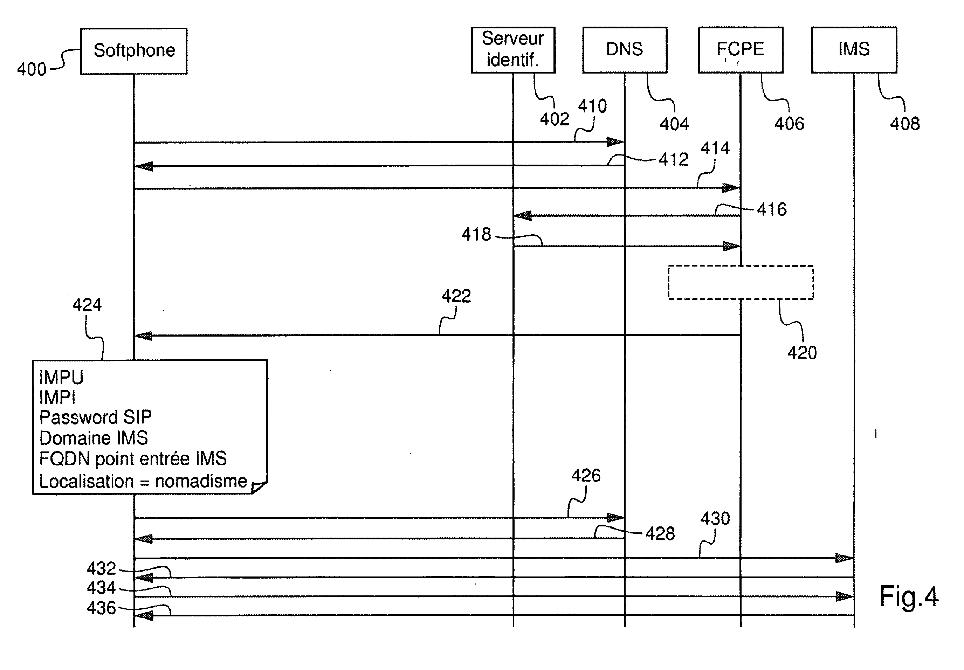

La figure 4 illustre schématiquement certaines étapes de configuration d'un terminal 400 de type softphone lors de son activation en situation de nomadisme en fonction du serveur d'identification 402, du serveur DNS 404, du serveur FCPE 406 et du coeur IMS 408.

Il est observé ici que, bien que toutes les communications entre le terminal 400 et les autres dispositifs transitent via un point d'accès, ce dernier n'est pas représenté dans un souci de clarté.

Une première étape a pour objet d'obtenir une adresse IP du serveur FCPE 406. A ces fins, une demande de résolution d'adresse est transmise par le terminal 400 au serveur DNS 404 (étape 410). Cette demande comprend l'adresse de type FQDN du serveur FCPE 406. En réponse, le serveur DNS 404 transmet l'adresse IP du serveur FCPE 406 (étape 412).

Le terminal 400 transmet alors une requête au serveur FCPE 406 pour obtenir un fichier de configuration VoIP (étape 414). Cette requête comprend notamment le cookie de session préalablement reçu par le terminal 400. Elle est, par exemple, émise selon le protocole http. A la réception de cette requête, le serveur FCPE 406 demande au serveur d'identification 402 l'identité du client utilisant le terminal 400 (étape 416). Cette demande comprend l'adresse IP source de la requête d'obtention d'un fichier de configuration VoIP, c'est-à-dire l'adresse IP du point d'accès via lequel le terminal 400 est connecté au réseau de communication.

Le serveur d'identification 402 ne connaissant pas l'adresse IP qu'il reçoit répond au serveur FCPE 406 que le client est inconnu (étape 418).

Le serveur FCPE 406 détermine alors à qui appartient le cookie de session reçu dans la requête d'obtention d'un fichier de configuration VoIP (par exemple en questionnant le serveur d'identification) et génère un fichier de configuration correspondant (étape 420). Ce fichier comprend une indication selon laquelle le terminal 400 est en situation de nomadisme.

Comme indiqué précédemment, si le cookie de session n'est plus valide, le serveur FCPE 406 peut transmettre au terminal 400 une demande d'authentification afin de renouveler le cookie de session (non représenté).

Le fichier de configuration VoIP ainsi que le cookie de session sont ensuite transmis par le serveur FCPE 406 au terminal 400 (étape 422). Le fichier de configuration VoIP est, de préférence, transmis dans le format xml.

Comme représenté, le fichier de configuration VoIP 424 reçu comprend la mention « localisation=nomadisme ».

Pour s'enregistrer, le terminal 400 transmet alors une demande de résolution d'adresse au serveur DNS 404 afin d'obtenir une adresse IP du coeur IMS 408 à partir d'une adresse de type FQDN (étape 426). En réponse, le terminal 400 reçoit du serveur DNS 404 l'adresse IP d'un point d'entrée du coeur IMS 408 (étape 428).

Le terminal 400 peut alors adresser une demande d'enregistrement au coeur IMS 408 (étape 430). La demande comprend l'identité publique du terminal 400. En réponse, le coeur IMS 408 demande au terminal 400 de s'authentifier (étape 432). Le terminal 400 transmet alors une demande d'enregistrement comprenant l'identité publique du terminal 400 et des données d'authentification au coeur IMS 408 (étape 434). Le coeur IMS 408 enregistre alors le terminal 400 et le lui confirme en lui indiquant la durée d'enregistrement (étape 436).

Le terminal 400 est alors prêt à émettre et à recevoir des appels.

Comme indiqué précédemment, après enregistrement, si le terminal de type softphone tente de passer un appel sortant, la signalisation d'appel transite dans le coeur IMS et les services téléphoniques liés à l'appelant sont déclenchés.

A nouveau, la signalisation d'appel SIP transite dans le serveur d'application et ce dernier peut retrouver le compte du client via son identité publique disponible dans les champs *From, P-Preferred-ID* et/ou *P-Asserted-ID* du message SIP. Il peut ainsi vérifier quels services liés à l'appelant doivent être activés pour ce client (secret d'appel, restriction d'appels, etc.).

Le serveur d'application vérifie alors le compteur d'appels simultanés autorisés pour ce client. Le champ SIP User Agent étant ici valorisé à « Softphone_Nomadisme », le serveur d'application doit autoriser au moins deux appels simultanés : un seul depuis le domicile et au moins un depuis un terminal en situation de nomadisme (à moins que le client n'ait souscrit à une offre permettant plusieurs appels simultanés à partir du domicile et/ou depuis une situation de nomadisme). Cette règle est, de préférence, configurée au niveau du serveur d'application.

Comme dans le cas précédent selon lequel le terminal de type softphone émet un appel en étant connecté au boîtier de connexion auquel il est lié, le compteur d'appels en cours est valorisé à la valeur zéro si aucun appel n'est en cours. L'appel sortant issu du terminal en situation de nomadisme est autorisé et le compteur d'appels en cours est incrémenté de un puis décrémenté de un lors de la libération d'appel via message de type *BYE.*

Si, durant un appel effectué par le terminal en situation de nomadisme, le boîtier de connexion du domicile tente d'établir un appel en parallèle, par exemple vers un numéro d'urgence, le serveur d'application constate que la valeur du compteur d'appel est égale à un avec un appel en cours en situation de nomadisme. Il autorise alors ce second appel depuis le domicile.

De même, si le boîtier de connexion du domicile a établi un premier appel avant la demande d'établissement d'appel par le terminal en situation de nomadisme, le serveur d'application accepte cet appel.

Cependant, si un second appel est tenté depuis le domicile, en supposant qu'un autre terminal de type softphone soit connecté au boîtier de connexion en plus du terminal téléphonique utilisé, le serveur d'application n'autorise pas ce deuxième appel via l'analyse des champs SIP « *User_ agent».*

En utilisant le champ SIP « *User_agent »,* le serveur d'application peut donc appliquer une logique de traitement d'appel différente pour les terminaux de type softphone en situation de nomadisme et pour les terminaux connectés à un boîtier de connexion auquel ils sont liés malgré le fait qu'ils aient la même identité publique IMPU.

La gestion d'un appel émis par un terminal de type softphone lorsque ce dernier est en situation de nomadisme est similaire à celle d'un appel émis par un terminal de type softphone lorsque ce dernier est directement connecté au boîtier de connexion auquel il est lié. Seul l'algorithme d'autorisation d'appels diffère.

Par conséquent, à l'exception de l'autorisation d'appels, l'algorithme décrit en référence à la figure 3 s'applique à la gestion d'un appel émis par un terminal de type softphone lorsque ce dernier est en situation de nomadisme.

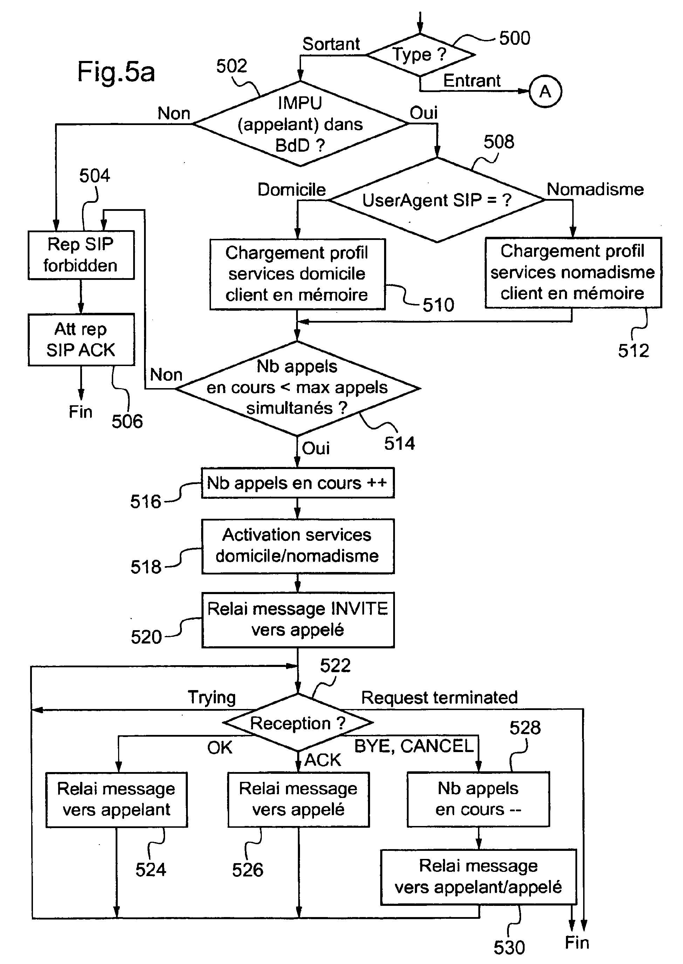

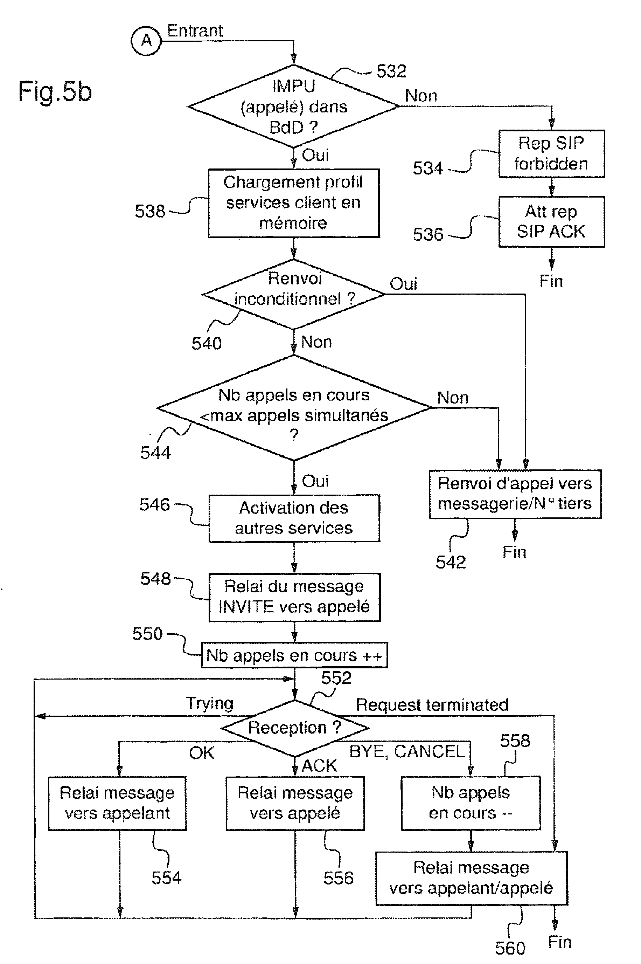

La figure 5, comprenant les figures 5a et 5b, illustre schématiquement certaines étapes mises en oeuvre dans un serveur d'application pour traiter des appels conformément à l'invention. La figure 5a vise la détection du type d'appel et le traitement des appels sortants tandis que la figure 5b vise les appels entrants.

Comme illustré sur la figure 5a, une première étape a pour objet de déterminer le type d'appel, c'est-à-dire déterminer s'il s'agit d'un appel entrant ou d'un appel sortant (étape 500).

S'il s'agit d'un appel sortant, une étape suivante a pour objet de déterminer si l'identité publique du terminal de l'appelant est connue du serveur d'application et mémorisée dans une base de données (BdD) dans laquelle sont stockées les identités publiques des terminaux autorisés à appeler via le service proposé (étape 502).

Si l'identité publique du terminal de l'appelant n'est pas connue du serveur d'application, une réponse de rejet d'appel est adressée au terminal de l'appelant (étape 504) qui transmet alors un accusé de réception au serveur d'application (étape 506). L'algorithme prend fin.

Si, au contraire, l'identité publique du terminal de l'appelant est connue du serveur d'application, un test est réalisé pour déterminer si le terminal de l'appelant se trouve en situation de nomadisme ou non (étape 508). Si le terminal de l'appelant ne se trouve pas en situation de nomadisme, un profil de services selon lequel l'appel reçu est émis du domicile (d'un terminal classique ou d'un terminal de type softphone) est chargé en mémoire du serveur d'application (étape 510). Dans le cas contraire, si le terminal de l'appelant se trouve en situation de nomadisme, un profil de services selon lequel l'appel reçu est émis d'un terminal de type softphone non connecté au boîtier de connexion auquel il est lié est chargé en mémoire du serveur d'application (étape 512). Les profils de services chargés en mémoire sont ici des services de type *originating.* Ils permettent notamment de déterminer la logique de services qui doit être utilisée.

Le nombre d'appels établis en cours, sans considérer l'appel en cours de traitement, est ensuite comparé au nombre maximal d'appels simultanés autorisés pour le client appelant, selon le profil préalablement chargé (étape 514). Cette étape vise ainsi à comparer le nombre d'appels en cours avec un nombre d'appels simultanés maximal selon l'origine des appels en cours. A titre d'illustration, deux appels simultanés peuvent être autorisés si au plus un appel est établi avec le boîtier de connexion considéré.

Si le nombre d'appels établis en cours n'est pas inférieur au nombre maximal d'appels simultanés autorisés pour le client appelant, selon le profil préalablement chargé, l'appel en cours de traitement est rejeté. A ces fins, une réponse de rejet d'appel est adressée à l'appelant (étape 504) qui transmet alors un accusé de réception au serveur d'application (étape 506). L'algorithme prend fin.

Au contraire, si le nombre d'appels établis en cours est inférieur au nombre maximal d'appels simultanés autorisés pour le client appelant, selon le profil préalablement chargé, le nombre d'appels en cours est incrémenté de un (étape 516). Les services liés à l'appelant sont alors activés en fonction du profil préalablement chargé en mémoire (étape 518), le message de signalisation d'appel (*INVITE*) est relayé à destination du terminal de l'appelé (étape 520) et les messages reçus par le serveur d'application sont analysés (étape 522).

Lorsque le message reçu est de type *100 TRYING,* l'algorithme boucle sur lui-même (au moins durant un temps prédéterminé) en attendant un nouveau message.

Lorsque le message reçu est de type *OK*, le message est relayé vers le terminal de l'appelant (étape 524). L'algorithme boucle alors sur lui-même (au moins durant un temps prédéterminé) en attendant un nouveau message.

Lorsque le message reçu est de type *ACK,* le message reçu est relayé vers le terminal de l'appelé (étape 526). L'algorithme boucle alors sur lui-même (au moins durant un temps prédéterminé) en attendant un nouveau message.

Lorsque le message reçu est de type *BYE* ou *CANCEL,* le nombre d'appel en cours est décrémenté de un (étape 528) et le message reçu est relayé vers le terminal de l'appelé ou de l'appelant pour mettre fin à l'appel et à l'algorithme (étape 530).

Enfin, lorsque le message reçu est de type *487 REQUEST_TERMINATED,* il est mis fin à l'algorithme.

Le traitement des appels entrants est illustré sur la figure 5b.

Si l'appel en cours de traitement est un appel entrant (figure 5a, étape 500), une étape suivante a pour objet de déterminer si l'identité publique du terminal appelé est connue du serveur d'application et mémorisée dans une base de données (BdD) dans laquelle sont stockées les identités publiques des terminaux autorisés à être appelés via le service proposé (étape 532).

Si l'identité publique du terminal de l'appelé n'est pas connue du serveur d'application, une réponse de rejet d'appel de type *404 Not Found* est adressée au terminal de l'appelant (étape 534) qui transmet alors un accusé de réception au serveur d'application (étape 536). L'algorithme prend fin.

Si, au contraire, l'identité publique du terminal de l'appelé est connue du serveur d'application, un profil de services pour l'appelé, généralement appelés services *terminating* en terminologie anglo-saxonne, est chargé en mémoire (étape 538).

Un test est alors effectué pour déterminer si le service de renvoi d'appels inconditionnel est activé (étape 540). Ce service a pour objet de renvoyer tous les appels entrants vers un numéro prédéterminé, par exemple un numéro de messagerie vocale ou un numéro tiers.

Si le service de renvoi d'appels inconditionnel est configuré, l'appel entrant est renvoyé vers un numéro prédéterminé référencé dans le profil *terminating* de l'appelé (étape 542). L'algorithme prend alors fin.

Si, au contraire le service de renvoi d'appels inconditionnel n'est pas configuré, un test est effectué pour comparer le nombre d'appels établis en cours, sans considérer l'appel en cours de traitement, avec le nombre maximal d'appels simultanés autorisés pour le client appelé, selon le profil préalablement chargé (étape 544). Cette étape vise ainsi à comparer le nombre d'appels en cours avec un nombre d'appels simultanés maximal selon l'origine des appels en cours. A titre d'illustration, deux appels simultanés peuvent être autorisés si au plus un appel est établi avec le boîtier de connexion considéré.

Si le nombre d'appels établis en cours n'est pas inférieur au nombre maximal d'appels simultanés autorisés pour le client appelé, l'appel en cours de traitement est renvoyé vers un numéro prédéterminé référencé dans le profil *terminating* de l'appelé (étape 542). L'algorithme prend fin.

Au contraire, si le nombre d'appels établis en cours est inférieur au nombre maximal d'appels simultanés autorisés pour le client appelant, les services *terminating* du client appelé sont activés (étape 546) et le message d'appel *INVITE* est relayé vers le terminal de l'appelé (étape 548).

Le nombre d'appels en cours est alors incrémenté de un (étape 550) et les messages reçus par le serveur d'application sont analysés (étape 552).

Lorsque le message reçu est de type *100 TRYING,* l'algorithme boucle sur lui-même (au moins durant un temps prédéterminé) en attendant un nouveau message.

Lorsque le message reçu est de type *200 OK,* le message est relayé vers le terminal de l'appelant (étape 554). L'algorithme boucle alors sur lui-même (au moins durant un temps prédéterminé) en attendant un nouveau message.

Lorsque le message reçu est de type *ACK,* le message reçu est relayé vers le terminal de l'appelé (étape 556). L'algorithme boucle alors sur lui-même (au moins durant un temps prédéterminé) en attendant un nouveau message.

Lorsque le message reçu est de type *BYE* ou *CANCEL,* le nombre d'appel en cours d'appels en cours est décrémenté de un (étape 558) et le message reçu est relayé vers le terminal de l'appelé ou de l'appelant pour mettre fin à l'appel et à l'algorithme (étape 560).

Enfin, lorsque le message reçu est de type *487 REQUEST_TERMINATED,* le message reçu est relayé vers le terminal de l'appelé ou de l'appelant pour mettre fin à l'appel et à l'algorithme (étape 560).

Un dispositif adapté à mettre en oeuvre l'invention ou une partie de l'invention est illustré sur la figure 6. Le dispositif 600 est par exemple une station de travail ou un ordinateur de type PC.

Le dispositif 600 comporte ici un bus de communication 605 auquel sont reliés :
- une unité centrale de traitement ou microprocesseur 610 (CPU, *Central Processing Unit) ;*
- une mémoire morte 615 (ROM, acronyme de *Read Only Memory* en terminologie anglo-saxonne) pouvant comporter les programmes "Prog", "Prog1" et "Prog2" ;
- une mémoire vive ou mémoire cache 620 (RAM, acronyme de *Random* Access *Memory* en terminologie anglo-saxonne) comportant des registres adaptés à enregistrer des variables et paramètres créés et modifiés au cours de l'exécution des programmes précités ; et,
- une interface de communication 650 adaptée à transmettre et à recevoir des données, notamment des messages relatifs à des appels entrants et sortants.

Optionnellement, le dispositif 600 peut également disposer :
- d'un écran 625 (Ec) permettant de visualiser des données et/ou de servir d'interface graphique avec l'utilisateur qui pourra interagir avec les programmes selon l'invention, à l'aide d'un clavier et d'une souris 630 (CS) ou d'un autre dispositif de pointage, un écran tactile ou une télécommande ;
- d'un disque dur (DD) 635 pouvant comporter les programmes "Prog", "Prog1" et "Prog2" précités et des données traitées ou à traiter selon l'invention ; et,
- d'un lecteur de cartes mémoires 640 (Lc) adapté à recevoir une carte mémoire 645 (C) et à y lire ou à y écrire des données traitées ou à traiter selon l'invention.

Le bus de communication permet la communication et l'interopérabilité entre les différents éléments inclus dans le dispositif 600 ou reliés à lui. La représentation du bus n'est pas limitative et, notamment, l'unité centrale est susceptible de communiquer des instructions à tout élément du dispositif 600 directement ou par l'intermédiaire d'un autre élément du dispositif 600.

Le code exécutable de chaque programme permettant au dispositif programmable de mettre en oeuvre les processus selon l'invention, peut être stocké, par exemple, dans le disque dur 635 ou en mémoire morte 615.

Selon une variante, la carte mémoire 645 peut contenir des données ainsi que le code exécutable des programmes précités qui, une fois lu par le dispositif 600, est stocké dans le disque dur 635.

Selon une autre variante, le code exécutable des programmes pourra être reçu, au moins partiellement, par l'intermédiaire de l'interface 650, pour être stocké de façon identique à celle décrite précédemment.

De manière plus générale, le ou les programmes pourront être chargés dans un des moyens de stockage du dispositif 600 avant d'être exécutés.

L'unité centrale 610 va commander et diriger l'exécution des instructions ou portions de code logiciel du ou des programmes selon l'invention, instructions qui sont stockées dans le disque dur 635 ou dans la mémoire morte 615 ou bien dans les autres éléments de stockage précités. Lors de la mise sous tension, le ou les programmes qui sont stockés dans une mémoire non volatile, par exemple le disque dur 635 ou la mémoire morte 615, sont transférés dans la mémoire vive 620 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Bien que la description soit essentiellement orientée vers le problème de la gestion d'appels simultanés, l'invention peut être mise en oeuvre pour résoudre des problèmes similaires.

En particulier, il est possible de proposer des offres de services téléphoniques différents pour les terminaux connectés à un boîtier de connexion et pour les terminaux de type softphone, liés à ce boîtier, en situation de nomadisme, ces derniers pouvant être considérés comme des terminaux secondaires. En particulier, le temps d'appel des terminaux connectés à un boîtier de connexion peut être différent de celui des terminaux de type softphone, liés à ce boîtier, en situation de nomadisme, notamment pour éviter la fraude et la surconsommation d'appels gratuits. De même, il est possible d'interdire les appels très fortement surtaxés passés depuis les terminaux de type softphone en situation de nomadisme. Il est également possible de ne pas proposer certains services, par exemple le service connu sous le nom de « Secret d'appel » depuis les terminaux de type softphone en situation de nomadisme. Il est également possible de proposer des paramètres différents selon les situations, par exemple de proposer des listes de téléphone différentes pour le service connu sous le nom de « Restriction d'appels » pour les terminaux connectés à un boîtier de connexion et pour les terminaux de type softphone, liés à ce boîtier, en situation de nomadisme

Bien entendu, il est possible d'utiliser un champ existant pour transmettre les informations mémorisées ici dans le champ SIP *« User Agent ».* Par exemple, il est possible d'utiliser le champ de localisation SIP PANI. Cependant, leur codage étant généralement normalisé il peut être déconseillé de le faire.

Enfin, l'information de localisation fournie dans le champ « *User_agent* » peut être obtenue de différente façon. En particulier, elle peut être obtenue à partir d'un module de positionnement, par exemple un module GPS installé dans le terminal de type softphone. Dans ce cas, l'information de localisation peut être exploitée par le serveur d'application et des services de géolocalisation liés à l'appelant peuvent être proposés. Ces informations peuvent être obtenue en temps réel avant chaque appel sortant et fournies dans le champ SIP « *User Agent* » (User agent = Softphone-Latitude-Longitude).

Il est également envisageable d'étendre la sémantique du champ SIP User Agent de façon à affiner la logique de service jouée par le serveur d'application, par exemple en concaténant une ou plusieurs autres informations exploitables par le serveur d'application. Ainsi, le type de terminal peut être concaténé à l'information de localisation (type de terminal - localisation). L'information complémentaire, ici « type de terminal », pourrait prendre, par exemple, l'une des valeurs *SoftPC, SoftMac, Softlphone, SoftAndroïd* ou *TablecPC.* Ainsi, à titre d'illustration, le ou les terminaux de type iPhone (iPhone est une marque), identifiés par la valeur Softlphone, pourraient se voir accorder plus d'appels simultanés en situation de nomadisme que les terminaux de type Androïd (Androïd est une marque) identifiés par la valeur *SoftAndroïd.* Une autre information pourrait être le type d'offre commerciale utilisée par le ou les différents terminaux, certaines offres pouvant offrir plus de services que d'autres.

Naturellement, pour satisfaire des besoins spécifiques, une personne compétente dans le domaine de l'invention pourra appliquer des modifications dans la description précédente.

### ANNEXE

**Table 1 (sans possibilité d'appels simultanés)**

| | | 2^{ème} appel | | | |
|---|---|---|---|---|---|
| | | Appel sortant (term. class.) | Appel sortant (softphone, domicile) | Appel sortant (softphone, nomad.) | Appel entrant |
| 1^{er} appel | Appel sortant (term. class.) | No | Non | Oui | Oui / Indication d'appel sur le term. occupé (si dispo.) |
| | Appel sortant (softphone, domicile) | Non | Non | Oui | |
| | Appel sortant (softphone, nomad.) | Oui | Oui | Oui | |
| | Appel entrant (domicile) | Non | Non | Oui | |
| | Appel entrant (nomad.) | Oui | Oui | Oui | |

**Table 2 (avec possibilité d'appels simultanés)**

| | | 2^{ème} appel | | | |
|---|---|---|---|---|---|
| | | Appel sortant (term. class.) | Appel sortant (softphone, domicile) | Appel sortant (softphone, nomad.) | Appel entrant |
| 1^{er} appel | Appel sortant (term. class.) | Oui | Oui | Oui | Indication d'appel (si dispo.) |
| | Appel sortant (softphone, domicile) | Oui | Oui | Oui | |
| | Appel sortant (softphone, nomad.) | Oui | Oui | Oui | |
| | Appel entrant (domicile) | Oui | Oui | Oui | |
| | Appel entrant (nomad.) | Oui | Oui | Oui | |

## Revendications

1. Procédé de gestion de services dans un serveur d'application de téléphonie (135) connecté à un réseau de communication (125), au moins un boîtier de connexion (110) étant relié audit réseau de communication, au moins un terminal nomade (140) étant directement relié audit réseau de communication ou étant relié audit réseau de communication via ledit au moins un boîtier de connexion, ledit au moins un terminal comprenant une identité publique liée audit au moins un boîtier de connexion et partagée avec au moins un autre terminal (105) lié audit au moins un boîtier de connexion, distinct dudit au moins un terminal appelé premier terminal, ce procédé comprend les étapes suivantes,
- réception (310) d'au moins une demande de service dudit premier terminal, ladite au moins une demande de service comprenant une indication de ladite localisation relative dudit premier terminal, ladite indication de localisation permettant de déterminer si ledit terminal est connecté au réseau de communication directement ou bien via le boîtier de connexion
- analyse (318, 414) de ladite au moins une demande de service selon une logique prédéterminée, ladite logique prédéterminée étant fonction d'une indication de localisation relative; et,
- en réponse à ladite étape d'analyse, rejet (322, 504) ou mise en oeuvre (326, 520) dudit au moins un service demandé.

2. Procédé selon la revendication 1 selon lequel ladite au moins une demande de service est un message de signalisation d'appel, ladite étape d'analyse comprenant une et de comparaison d'un nombre d'appels en cours liés audit au moins un boîtier de connexion avec un nombre maximal d'appels autorisés selon ladite au moins une indication de localisation relative.

3. Procédé selon la revendication 2, ledit message de signalisation étant un message conforme au protocole SIP, ladite indication de localisation relative étant transmise dans un champ dédié dudit message.

4. Procédé selon la revendication 1, le procédé comprenant en outre une étape de chargement d'un profil de services (510, 512), ledit profil étant lié à un utilisateur dudit premier terminal et à ladite indication de localisation relative.

5. Procédé selon l'une quelconque des revendications précédentes, le procédé comprenant en outre une étape de transmission (242, 422) d'au moins une information de configuration dudit premier terminal, préalablement à ladite étape de réception d'au moins une demande de service, ladite au moins une information de configuration étant transmise en réponse à une demande d'activation dudit premier terminal (234, 414), ladite information de configuration étant représentative de ladite indication de localisation relative,
la réception de ladite demande d'activation et ladite étape de transmission d'au moins une information de configuration dudit premier terminal étant mises en oeuvre dans un serveur de configuration (210, 406).

6. Procédé selon la revendication 5 selon lequel ladite indication de localisation relative est déterminée selon une adresse source comprise dans ladite demande d'activation.

7. Procédé selon la revendication 5 comprenant en outre une étape d'activation initiale dudit premier terminal, ledit premier terminal étant relié audit au moins un boîtier de connexion, ladite étape de configuration comprenant la création (240) et la transmission audit premier terminal d'un cookie de session comprenant une identification dudit premier terminal.

8. Procédé selon la revendication 7, le procédé comprenant en outre une étape de réception dudit cookie de session (414) et une étape d'identification dudit premier terminal à partir dudit cookie de session reçu.

9. Programme d'ordinateur comprenant des instructions adaptées à ta mise en oeuvre de chacune des étapes du procédé selon l'une quelconque des revendications 1 à 4 lorsque ledit programme est exécuté sur un ordinateur.

10. Programme d'ordinateur comprenant des instructions adaptées à la mise en oeuvre de chacune des étapes du procédé selon l'une quelconque des revendications 5 à 8 lorsque ledit programme est exécuté sur un ordinateur.

11. Serveur d'application de téléphonie comprenant des moyens adaptés à la mise en oeuvre de chacune des étapes du procédé selon l'une quelconque des revendications 1 à 4

12. Dispositif comprenant au moins un serveur d'application de téléphonie et au moins un serveur de configuration, le dispositif comprenant des moyens adaptés à la mise en oeuvre de chacune des étapes du procédé selon l'une quelconque des revendications 5 à 8.

## Patentansprüche

1. Verfahren zur Verwaltung von Diensten in einem Telefon-Anwendungsserver (135), der mit einem Kommunikationsnetzwerk (125) verbunden ist, wobei mindestens ein Anschlusskasten (110) mit dem Kommunikationsnetzwerk verbunden ist, mindestens ein nomadisches Endgerät (140) direkt mit dem Kommunikationsnetzwerk oder über den mindestens einen Anschlusskasten mit dem Kommunikationsnetzwerk verbunden ist, wobei das mindestens eine Endgerät eine mit dem mindestens einen Anschlusskasten verbundene und mit mindestens einem weiteren mit dem mindestens einen Anschlusskasten verbundenen anderen Endgerät (105), das sich von dem mindestens einen Endgerät, erstes Endgerät genannt, unterscheidet, geteilte öffentliche Identität enthält, wobei dieses Verfahren die folgenden Schritte enthält
- Empfang (310) mindestens einer Dienstanforderung vom ersten Endgerät, wobei die mindestens eine Dienstanforderung eine Anzeige des relativen Standorts des ersten Endgeräts enthält, wobei die Standortanzeige es ermöglicht festzustellen, ob das Endgerät direkt oder über den Anschlusskasten mit dem Kommunikationsnetzwerk verbunden ist,
- Analyse (318, 414) der mindestens einen Dienstanforderung gemäß einer vorbestimmten Logik, wobei die vorbestimmte Logik von einer relativen Standortanzeige abhängt, und
- als Antwort auf den Analyseschritt, Zurückweisung (322, 504) oder Durchführung (326, 520) des mindestens einen angeforderten Diensts.

2. Verfahren nach Anspruch 1, wobei die mindestens eine Dieristanforderung eine Anrufsignalisierungsmitteilung ist, wobei der Analyseschritt einen Schritt des Vergleichs einer Anzahl von laufenden Anrufen, die mit dem mindestens einen Anschlusskasten verbunden sind, mit einer maximalen Anzahl von gemäß der mindestens einen relativen Standortanzeige erlaubten Anrufen enthält.

3. Verfahren nach Anspruch 2, wobei die Signalisierungsanzeige eine Mitteilung gemäß dem Protokoll SIP ist, wobei die relative Standortanzeige in einem dedizierten Feld der Mitteilung übertragen wird.

4. Verfahren nach Anspruch 1, wobei das Verfahren außerdem einen Schritt des Ladens eines Diensteprofils (510, 512) enthält, wobei das Profil mit einem Benutzer des ersten Endgeräts und mit der relativen Standortanzeige verbunden ist.

5. Verfahren nach einem der vorhergehenden Ansprüche, wobei das Verfahren außerdem einen Übertragungsschritt (242, 422) mindestens einer Konfigurationsinformation des ersten Endgeräts vor dem Empfangsschritt mindestens einer Dienstanforderung enthält, wobei die mindestens eine Konfigurationsinformation als Antwort auf eine Aktivierungsanforderung des ersten Endgeräts (234, 414) übertragen wird, wobei die Konfigurationsinformation für die relative Standortanzeige repräsentativ ist,
wobei der Empfang der Aktivierungsanforderung und der Übertragungsschritt mindestens einer Konfigurationsinformation des ersten Endgeräts in einem Konfigurationsserver (210, 406) durchgeführt werden.

6. Verfahren nach Anspruch 5, wobei die relative Standortanzeige gemäß einer Quellenadresse festgestellt wird, die in der Aktivierungsanforderung enthalten ist.

7. Verfahren nach Anspruch 5, das außerdem einen Schritt der Anfangsaktivierung des ersten Endgeräts enthält, wobei das erste Endgerät mit dem mindestens einen Anschlusskasten verbunden ist, wobei der Konfigurationsschritt die Erzeugung (240) und die Übertragung an das erste Endgerät eines Sitzungs-Cookies enthält, das eine Identifikation des ersten Endgeräts enthält.

8. Verfahren nach Anspruch 7, wobei das Verfahren außerdem einen Schritt des Empfangs des Sitzungs-Cookies (414) und einen Schritt der Identifizierung des ersten Endgeräts ausgehend von dem empfangenen Sitzungs-Cookie enthält.

9. Computerprogramm, das Anweisungen enthält, die für die Durchführung jedes der Schritte des Verfahrens nach einem der Ansprüche 1 bis 4 geeignet sind, wenn das Programm in einem Computer ausgeführt wird.

10. Computerprogramm, das Anweisungen enthält, die für die Durchführung jedes der Schritte des Verfahrens nach einem der Ansprüche 5 bis 8 geeignet sind, wenn das Programm in einem Computer ausgeführt wird.

11. Telefon-Anwendungsserver, der Einrichtungen enthält, die für die Durchführung jedes der Schritte des Verfahrens nach einem der Ansprüche 1 bis 4 geeignet sind.

12. Vorrichtung, die mindestens einen Telefon-Anwendungsserver und mindestens einen Konfigurationsserver enthält, wobei die Vorrichtung Einrichtungen enthält, die für die Durchführung jedes der Schritte des Verfahrens nach einem der Ansprüche 5 bis 8 geeignet sind.

## Claims

1. Service management process in a telephony application server (135) connected to a communication network (125), at least one junction box (110) being linked to said communication network, at least one nomadic terminal (140) being directly linked to said communication network or being linked to said communication network via said at least one junction box, said at least one terminal comprising a public identity tied to said at least one junction box and shared with at least one other terminal (105) linked to said at least one junction box, distinct from said at least one terminal known as first terminal, this process comprises the following steps:
- receipt (310) of at least one service request from said first terminal, said at least one service request comprising an indication of said relative location of said first terminal;
- said localization indication making it possible to determine whether said terminal is connected to the communication network directly or via the junction box
- analysis (318, 414) of said at least one service request according to a predetermined logic, said predetermined logic being a function of a relative location indication;
- in response to said analysis step, rejection (322, 504) or implementation (326, 520) of said at least one service requested.

2. Process according to Claim 1, according to which said at least one service request is a call-signalling message, said analysis step comprising a comparative study of a number of calls in progress linked to said at least one junction box with a maximum number of calls authorised according to said at least one relative location indication.

3. Process according to Claim 2, said signalling message being a message in compliance with the SIP protocol, said relative location indication being transmitted in a dedicated field of said message.

4. Process according to Claim 1, the process moreover comprising a step of loading a service profile (510, 512), said profile being linked to a user of said first terminal and to said relative location indication.

5. Process according to any one of the preceding claims, the process moreover comprising a step of transmission (242, 422) of at least one item of configuration information of said first terminal, prior to said step of receiving at least one service request, said at least one item of configuration information being transmitted in response to an activation request of said first terminal (234, 414), said configuration information being representative of said relative location indication,
the receipt of said activation request and said step of transmission of at least one item of configuration information of said first terminal being implemented in a configuration server (210, 406).

6. Process according to Claim 5, according to which said relative location indication is determined according to a source address included in said activation request.

7. Process according to Claim 5, moreover comprising a step of initial activation of said first terminal, said first terminal being linked to said at least one junction box, said configuration step comprising the creation (240) and the transmission to said first terminal of a session cookie comprising an identification of said first terminal.

8. Process according to Claim 7, the process moreover comprising a step of receiving said session cookie (414) and a step of identification of said first terminal from said session cookie received.

9. Computer program containing instructions suitable for the implementation of each of the steps of the process according to any one of Claims 1 to 4 when said program is executed on a computer.

10. Computer program containing instructions suitable for the implementation of each of the steps of the process according to any one of Claims 5 to 8 when said program is executed on a computer.

11. Telephony application server comprising means suitable for the implementation of each of the steps of the process according to any one of Claims 1 to 4.

12. Device comprising at least one telephony application server and at least one configuration server, the device comprising means suitable for the implementation of each of the steps of the process according to any one of Claims 5 to 8.
